# EUROPEAN PATENT SPECIFICATION

(11) **EP 4 546 601 B1**
(45) Date of publication and mention of the grant of the patent: **23.09.2026**
(21) Application number: 23894955.6
(22) Date of filing: 20.11.2023
(51) Int. Cl.: H02J 7/60, H02J 3/32, H02J 9/00, H02J 1/08

(54) **APPARATUS AND METHOD FOR CONTROLLING BATTERY OF AN ENERGY STORAGE SYSTEM**
VORRICHTUNG UND VERFAHREN ZUR STEUERUNG DER BATTERIE EINES ENERGIESPEICHERSYSTEMS
APPAREIL ET PROCÉDÉ DE COMMANDE DE BATTERIE D'UN SYSTÈME DE STOCKAGE D'ÉNERGIE

(30) Priority: 24.11.2022 KR 20220159632
(43) Date of publication of application: 30.04.2025
(73) Proprietor: LG Energy Solution, Ltd., Seoul 07335 (KR)
(72) Inventor: HWANG, Jin-Woo, Daejeon 34122 (KR); HEO, Jin-Seok, Daejeon 34122 (KR); KIM, Jae-Hwan, Daejeon 34122 (KR); LEE, Jung-Su, Daejeon 34122 (KR); CHO, Sung-Hyun, Daejeon 34122 (KR)
(74) Representative: BCKIP Part mbB
(86) International application number: PCT/KR2023/018649
(87) International publication number: WO 2024/112027

(56) References cited:
- KR-A- 20210 007 719
- KR-A- 20210 087 295
- KR-A- 20210 087 816
- US-A1- 2013 082 662
- US-A1- 2019 044 376
- US-A1- 2019 319 472
- US-A1- 2021 013 723
- US-A1- 2022 337 074

## Description

### TECHNICAL FIELD

The present disclosure relates to a battery control apparatus and method, and more specifically, to a battery control apparatus and method capable of black start and power control.

### BACKGROUND ART

Recently, due to the environmental pollution problem of fossil fuels, the use of new and renewable energy such as solar power, wind power, and geothermal heat is gradually increasing. New and renewable energy is stored in a power storage device called ESS. ESS is a device that converts new and renewable energy into electrical energy, stores the electrical energy a battery, and provides the electrical energy stored in the battery to a power system.

In addition to storing new and renewable energy, ESS is used in homes and factories to store electric energy from the power grid in a battery during times when electricity rates are low, and then supply the electric energy stored in the battery to various electrical devices during the daytime.

The power system including ESS may include an external control device. The external control device may refer to a power conversion device such as a PCS or inverter. The external control device may convert the electrical characteristics, such as frequency, voltage, and DC/AC of the power supplied from the power grid or the power stored in the ESS between the power grid and the ESS.

The ESS may include a battery controller that performs various operations for receiving and transmitting power, and an external control device may be closely connected to the ESS through communication with the battery controller.

If the amount of power consumed by the ESS itself is greater than the power stored, for example, in winter or high latitudes, the battery may not be able to charge for a long time. In this case, the external control device may control the ESS, that is, the battery controller, from a normal operating state to a sleep mode in order to minimize power consumption. This operation of controlling the power of the ESS is possible only when the external control device is operable (on state).

For various reasons, grid outage or wide area outage may occur in the power system including the ESS and the external control device. In this case, the breaker connecting the battery and the external control device may turn off. At this time, black start, which is a power recovery procedure that first restores the ESS and then restores the external control device using the power stored in the ESS, may be performed. For example, the document US-A-2022337074 discloses a battery management apparatus capable reducing the current consumption of a component for waking up a microcontroller unit. The battery management apparatus includes a wake-up unit, a first power supply path, a first regulator, a first switching element, a feedback module, and a microcontroller unit configured to convert a sleep mode to a wake-up mode by receiving a wake-up signal from the wake-up unit and connected to the feedback module to turn off the first switching element.

In conclusion, black start is a procedure in which the ESS, that is, the battery controller, first becomes operable and then the external control device is restored, but black start conflicts with the above-described function in which the external control device in the operable state controls the power of the ESS, so it is not easy to implement the two functions together. Accordingly, in the technical field to which the present disclosure belongs, technology that can implement both of the above-mentioned functions is urgently needed.

### DISCLOSURE

### Technical Problem

The present disclosure is designed under the above background, and therefore the present disclosure is directed to providing a battery control apparatus and method that may efficiently perform a black start function and a power control function of the battery control apparatus by an external control device.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims.

### Technical Solution

A battery control apparatus according to an aspect of the present disclosure is defined by the independent claim 1.

The driving unit may be configured to stop outputting the starting power after the starting time has elapsed.

A breaker may be provided on the charging and discharging path of the battery, and the driving unit may be connected to an end opposite to the battery among both ends of the breaker.

The starting power may be supplied from a first node located on the charging and discharging path at a part electrically connected to the battery as the breaker transitions to an on state.

The power supply unit may be configured to generate the first operation power from the first node.

The switching unit may be configured to be connected to a second node located between the battery and the breaker.

The power supply unit may be configured to generate the second operation power from the second node through the switching unit.

Based on that a sleep signal is received from an external control device, the control unit may be configured to turn off at least one of the switching unit and a relay located between a breaker and the external control device.

The driving unit may be configured to include a photo coupler that receives a wake-up signal from an external control device.

The driving unit may be configured to output the starting power to the power supply unit during the starting time, based on that a wake-up signal is received from the external control device.

A battery pack according to another aspect of the present disclosure may comprise the battery control system.

A battery control method according to another aspect of the present disclosure is defined by the independent claim 12.

### Advantageous Effects

According to one aspect of the present disclosure, a battery control apparatus that may efficiently perform both a black start function and a power control function for the battery control apparatus is provided.

In addition, according to one aspect of the present disclosure, the power control operation for the battery control apparatus is possible without switching the state of the breaker, and in particular, the battery control apparatus may be woken up through a low voltage signal, resulting in improved efficiency.

The effects of the present disclosure are not limited to the effects mentioned above, and other effects not mentioned will be clearly understood by those skilled in the art from the description of the claims.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram schematically showing a power system including a battery control apparatus according to an embodiment of the present disclosure.
FIG. 2 is an exemplary circuit diagram implementing a driving unit according to an embodiment of the present disclosure.
FIG. 3 is a graph schematically showing a voltage applied to a first switching element and a third switching element described with reference to FIG. 2.
FIG. 4 is a diagram showing states of various signals transmitted and received between components while a control unit switches from a shutdown state to a normal operation mode.
FIG. 5 is a diagram showing the states of various signals transmitted and received between components while the control unit switches from the shutdown state to the normal operation mode.
FIG. 6 is a diagram showing the states of various signals transmitted and received between components during the power control operation by an external control device.
FIG. 7 is a diagram schematically showing a state machine for an energy storage system including the battery control apparatus according to an embodiment.
FIG. 8 is a flowchart schematically showing a battery control method according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Additionally, in describing the present disclosure, when it is deemed that a detailed description of relevant known elements or functions renders the key subject matter of the present disclosure ambiguous, the detailed description is omitted herein.

The terms including the ordinal number such as "first", "second" and the like, may be used to distinguish one element from another among various elements, but not intended to limit the elements by the terms.

Throughout the specification, when a portion is referred to as "comprising" or "including" any element, it means that the portion may include other elements further, without excluding other elements, unless specifically stated otherwise. Additionally, terms such as "unit", "module", or "control unit" described in the specification refer to a unit that processes at least one function or operation, and may be implemented as hardware, software, or a combination of hardware and software.

In addition, throughout the specification, when a portion is referred to as being "connected" to another portion, it is not limited to the case that they are "directly connected", but it also includes the case where they are "indirectly connected" with another element being interposed between them.

Hereinafter, preferred embodiments of the present disclosure will be described in detail with reference to the accompanying drawings.

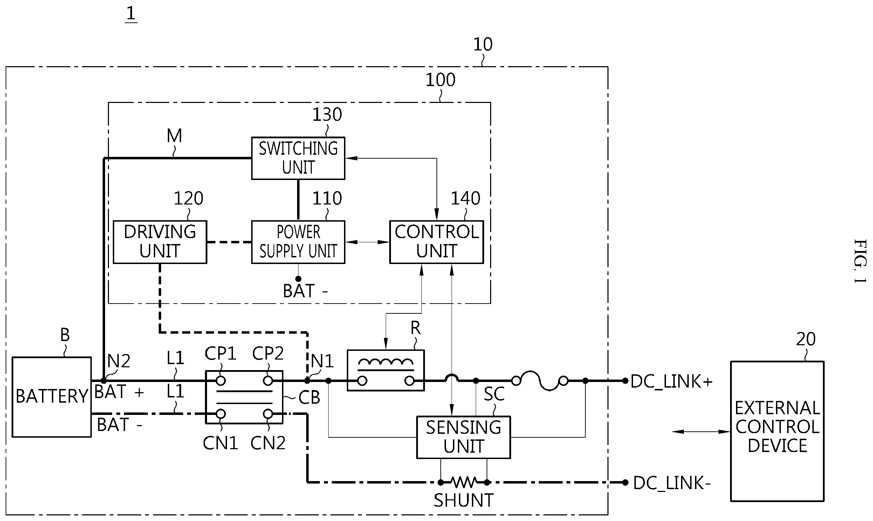

FIG. 1 is a diagram schematically showing a power system 1 including a battery control apparatus 100 according to an embodiment of the present disclosure.

The power system 1 may include an energy storage system 10 and an external control device 20. Here, the energy storage system 10 may include an ESS or battery pack including a battery B. The external control device 20 may include a power conversion device such as a PCS or inverter.

The external control device 20 may be electrically connected to the energy storage system 10 through a DC link terminal (DC_LINK+, DC_LINK-) and may convert the electrical characteristics of power (e.g., frequency, voltage, DC/AC). For example, the electrical characteristics of power supplied from the power grid may be converted through the external control device 20 and stored in the energy storage system 10. Additionally, the electric power stored in the energy storage system 10 may have its electrical characteristics converted through the external control device 20 and be supplied to the power grid.

The external control device 20 may control the power of the energy storage system 10. Specifically, the external control device 20 may control the power of the energy storage system 10 in a sleep mode that minimizes the power supply to the battery control apparatus 100 (which may be referred to as 'battery controller'), which controls the operation of the energy storage system 10. In sleep mode, the power consumption of the battery control apparatus 100 may be minimized. Specifically, when the battery control apparatus 100 is in the sleep mode, the power stored in the energy storage system 10 cannot be supplied to the outside (e.g., power grid, load) through the external control device 20, and power cannot be supplied to the energy storage system 10 from the outside.

Additionally, the external control device 20 may control the power of the energy storage system 10 in a normal operation mode that sets the power supply to the battery control apparatus 100 to a normal state. In the normal operation mode, the power consumption of the battery control apparatus 100 is greater compared to the sleep mode, and the normal operation of the energy storage system 10 may be performed. Specifically, when the battery control apparatus 100 is in a normal operation mode, the power stored in the energy storage system 10 may be supplied to the outside through the external control device 20, and power may be supplied from the outside through the external control device 20.

The energy storage system 10 may include a battery and the battery control apparatus 100.

The battery B may include a plurality of battery cells. The plurality of battery cells may be connected to each other in series or parallel. The plurality of battery cells may be manufactured to have the same electrochemical specifications. For example, the type of battery cells is not particularly limited as long as they can be repeatedly charged and discharged, such as a lithium-ion cell.

The battery B may store power (electrical energy) supplied from the outside through the external control device 20 under the control of the battery control apparatus 100. The battery B may output the stored power to the outside under the control of the battery control apparatus 100.

The battery control apparatus 100 may manage and control the overall operation of the energy storage system 10. Specifically, the battery control apparatus 100 may set its operating state based on a control signal regarding the operation mode received from the external control device 20. For example, the battery control apparatus 100 may switch to the sleep mode based on a sleep signal received from the external control device 20 while operating in the normal operation mode. Additionally, the battery control apparatus 100 may switch to the normal operation mode based on a wake-up signal received from the external control device 20 while operating in the sleep mode.

Meanwhile, the energy storage system 10 may further include a breaker CB, a relay R, and a sensing unit SC.

The breaker CB may be provided on the charging and discharging path L1 between the energy storage system 10 and the external control device 20. The breaker CB may be configured to block the power supplied to the power grid when operating (trip). On the other hand, if the breaker CB does not operate, power input and output are possible through the charging and discharging path L1.

The relay R may be provided on the charging and discharging path L1 between the energy storage system 10 and the external control device 20. When the relay R is in the on state, power may be output to the outside or power may be input from the outside. On the other hand, when the relay R is in the off state, power output to the outside may be stopped and power input from the outside may be stopped.

The sensing unit SC may sense the physical quantity of the battery B. The physical quantity of the battery B may include at least one of voltage, current, or temperature of the battery B. For example, the sensing unit SC may include a current sensing circuit and may detect the current flowing through the charging and discharging path L1 between the battery and the DC link terminal (DC_LINK+, DC_LINK-). The sensing unit SC may generate a current signal indicating the magnitude of the detected current, and may transmit the generated current signal to the battery control apparatus 100. As an example, the sensing unit SC may be configured to include at least one of known current detection elements such as a shunt resistor and a Hall effect element.

For convenience of explanation, the breaker CB, the relay R, and the sensing unit SC are shown as being located outside the battery control apparatus 100. However, in various embodiments, at least some of these components may be included in the battery control apparatus 100, or at least some of components included in the battery control apparatus 100 may be included inside or outside the energy storage system 10. In various embodiments, it is natural that electrical connections are formed between the components. Additionally, in addition to the components shown, various components related to the energy storage system 10 may be further employed.

The battery control apparatus 100 may include a power supply unit 110, a driving unit 120, a switching unit 130, and a control unit 140.

The power supply unit 110 may be configured to be electrically connected to the charging and discharging path L1 of the battery B. For example, the power supply unit 110 may receive the power stored in the battery through the charging and discharging path L1 of the battery B and generate power for the operation of the battery control apparatus 100. The power for operation of the battery control apparatus 100 may be referred to as operation power.

The power supply unit 110 may generate an operation power having a predetermined size. For example, the power supply unit 110 may generate an operation power of 12 V. The power supply unit 110 may include a voltage regulator. In this case, the power supply unit 110 may convert the voltage stored in the battery to correspond to the amount of voltage required by the control unit 140 or other components. For example, the power supply unit 110 may generate an operation power converted from 12 V to 3.3 V through the voltage regulator.

The power supply unit 110 may provide the generated operation power to the control unit 140.

The driving unit 120 may be configured to operate the power supply unit 110 by applying a starting power to the power supply unit 110. For this purpose, the driving unit 120 may be connected to the charging and discharging path L1. Additionally, the driving unit 120 may supply a starting power to the power supply unit 110 from the charging and discharging path L1 connected in this way. In particular, the driving unit 120 may be configured to supply the starting power during a preset starting time. In this way, the driving unit 120 may allow the power supply unit 110 to generate the above-described operation power by applying the starting power to the power supply unit 110.

The switching unit 130 may be configured to be connected between the charging and discharging path L1 of the battery B and the power supply unit 110. Specifically, when the switching unit 130 is turned on based on the control signal from the control unit 140, a main power path M is formed between the charging and discharging path L1 and the power supply unit 110, and the power is supplied from the battery through the main power path M. The supplied power may be provided to the power supply unit 110 through the switching unit 130.

The control unit 140 may be configured to apply the first operation power output from the power supply unit 110. The first operation power may refer to a power generated by the power supply unit 110 through the starting power output from the driving unit 120 during the preset starting time. The power supply unit 110 may output the generated first operation power to the control unit 140.

The control unit 140 may turn on the switching unit 130 in response to the first operation power.

That is, when the control unit 140 receives the first operation power from the power supply unit 110, the control unit 140 may turn on the switching unit 130 using the received first operation power. When the switching unit 130 is turned on, the power from the battery may be provided to the power supply unit 110 via the switching unit 130 through the main power path M between the charging and discharging path L1 and the power supply unit 110.

The control unit 140 is operatively connected to other components including the power supply unit 110, the driving unit 120, and the switching unit 130 of the battery control apparatus 100, and may control various operations of the battery control apparatus 100. That is, the control unit 140 may be operably coupled to the power supply unit 110, the driving unit 120, and the switching unit 130. The operational combination of two components means that the two components are connected directly or indirectly to enable transmission and reception of signals in one direction or two directions.

In terms of hardware, the control unit 120 may be implemented using at least one of ASICs (application specific integrated circuits), DSPs (digital signal processors), DSPDs (digital signal processing devices), PLDs (programmable logic devices), FPGAs (field programmable gate arrays), microprocessors, and other electrical units to perform functions. The control unit 140 may have a built-in memory device, and the memory device may include, for example, RAM, ROM, registers, hard disks, optical recording media, or magnetic recording media. Alternatively, the memory device may not be built into the control unit 140 but may be included in the battery control apparatus 100. The memory device may store, update, and/or erase programs including various control logics executed by the control unit 140 and/or data generated when the control logic is executed.

The control unit 140 may be driven through the second operation power generated by the power supply unit 110 after the starting time.

Specifically, the driving unit 120 may be configured so that the starting power is not applied to the power supply unit 110 after the starting time. That is, when the starting time elapses, the operation of the driving unit 120, which outputs the starting power to the power supply unit 110, may be terminated. Accordingly, the power supply unit 110 may not generate the first operation power due to the termination of the operation of the driving unit 120, but may instead generate the second operation power through the power provided from the main power path M through the switching unit 130. The power supply unit 110 may provide the second operation power to the control unit 140. The control unit 140 may perform various operations of the battery control apparatus 100 using the second operation power. When the generated second operation power is continuously provided to the control unit 140, the control unit 140 may escape from a state in which it does not operate normally (for example, a shutdown state or sleep mode). That is, the control unit 140 may wake up from a state (e.g., sleep mode) that does not consume power or consumes minimal power and switch to a standby mode by the second operation power.

According to this embodiment of the present disclosure, both power control and black start functions of the battery control apparatus 100 (or control unit 140) by the external control device 20 are possible through the driving unit 120 operating during a predetermined starting time.

Specifically, the driving unit 120 may electrically connect the node at the rear of the breaker CB and the power supply unit 110 by transitioning the breaker CB from the trip state to the on state for the black start function, and control the control unit 140 through the series of processes described above to escape from the shutdown state. In addition, when the driving unit 120 receives a wake-up signal from the external control device 20, the driving unit 120 may electrically connect the node at the rear end of the breaker CB and the power supply unit 110 and allow the control unit 140 to escape from the sleep mode through the above-described series of processes.

That is, the battery control apparatus 100 according to the embodiment of the present disclosure may electrically connect the node at the rear end of the breaker CB and the power supply unit 110 for a predetermined starting time, and after the starting time has elapsed, may implement the on/off control operation (power control operation) and the black start function by the external control device 20 using the driving unit 120, which is configured to block the connection of the power supply unit 110 and the node at the rear end of the breaker CB. That is, the first operation power and the second operation power are power generated by the power supply unit 110 through the power supplied from different nodes in the charging and discharging path, and the transmission paths of the first operation power and the second operation power are also different from each other.

Assuming that the battery B power is continuously supplied through the switching unit 130 from the node at the front end of the breaker CB to the control unit 140 without a power path from the node at the rear end of the breaker CB to the power supply unit, the battery B power continues to be transmitted to the control unit 140 through the switching unit 130. Therefore, it is impossible to control the power of the control unit 140 by the external control device 20, and in order to control the power of the control unit 140, the breaker CB must be used to supply power to the control unit 140 or stop the power supplied.

According to an embodiment of the present disclosure, by making the transmission path of the first operation power at the initial startup time (when the black start function is executed or the time point at which the control unit 140 is released from the sleep mode) of the control unit 140 and the transmission path of the second operation power after a predetermined starting time different from each other, both the power control function of the control unit 140 by the external control device 20 and the black start function may be implemented. That is, according to the present disclosure, during the initial startup of the control unit 140, the battery B power may be supplied to the control unit 140 through the driving unit 120, and thereafter, the battery B power may be supplied to the control unit 140 through another path (main power path M) that does not go through the driving unit 120. Therefore, according to the configuration of the present disclosure, both the power control function for the control unit 140 of the external control device 20 and the black start function that starts the external control device 20 after the control unit 140 wakes up first may be implemented without the operation of the breaker CB.

In other words, according to the embodiment of the present disclosure, the black start function of waking up the power system 1 by first starting the battery control apparatus 100 and then starting the external control device 20 and the power control operation of the battery control apparatus 100 by the external control device 20, which are conflicting concepts, may be all enabled. An embodiment of the present disclosure will be described in detail with reference to the drawings below. In addition, various operations described below as being performed by the control unit 140 may also be understood as being performed by the battery control apparatus 100 or the energy storage system 10 including the control unit 140, and other components may be involved together.

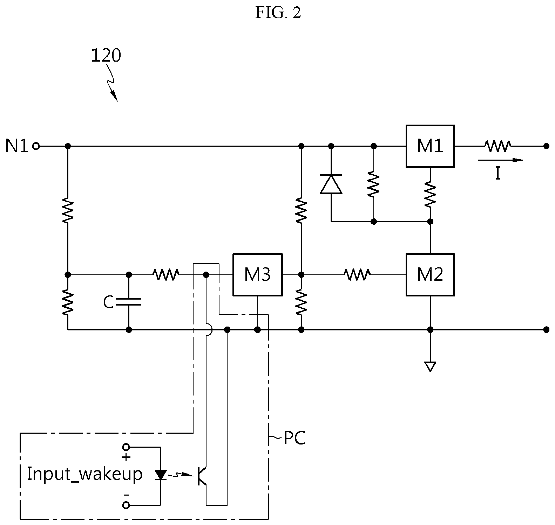

FIG. 2 is an exemplary circuit diagram implementing a driving unit 120 according to an embodiment of the present disclosure.

Referring to FIG. 2, the operation of the driving unit 120 when the black start function is executed will be described.

The driving unit 120 may be connected to the charging and discharging path L1 through the first node N1. As shown in FIG. 1, the first node N1 is a node at the rear end of the breaker CB and may be a node located on the charging and discharging path L1 between the breaker CB and the external control device 20.

The driving unit 120 may include a plurality of switching elements. The plurality of switching elements may be implemented with known elements such as BJP and MOSFET. The operating states of the first switching element M1, the second switching element M2, and the third switching element M3 may be implemented to be opposite to each other. For example, the driving unit 120 may be configured so that when the first switching element M1 and the second switching element M2 are turned on, the third switching element M3 is in the turn-off state, and conversely, so that when the first switching element M1 and the second switching element M2 are turned off, the third switching element M3 is in the turn-on state. As an example, the first switching element M1 may be a p-type MOSFET, and the second switching element M2 and the third switching element M3 may be an n-type MOSFET. For convenience of understanding, it will be described that the first switching element M1 and the second switching element M2 are in the turn-off state, and the third switching element M3 is in the turn-on state as the initial state.

First, the breaker CB may transition from the trip state to the on state. For example, when the black start function is executed, the breaker CB may be manually transitioned from the trip state to the on state by input from an external source (e.g., a user).

As the breaker CB transitions to the on state, the power from the battery is applied to the first node N1. In response to the power applied to the first node N1, the third switching element M3 may be configured to transition from the turn-on state to the turn-off state.

When the third switching element M3 is turned off, the first switching element M1 and the second switching element M2 may be configured to transition from the turn-off state to the turn-on state. Therefore, the current (I) flows to the power supply unit 110 through the first switching element M1, and the starting power from the battery may be supplied to the power supply unit 110. The time at which the current flows to the power supply unit 110 through the first switching element M1, that is, the time at which the starting power is supplied to the power supply unit 110, may be referred to as starting time.

The driving unit 120 may be configured to stop output of the starting power supplied to the power supply unit 110 after the starting time has elapsed.

Specifically, while the power applied to the first node N1 continues, the third switching element M3 may be configured to turn on again due to charging of the capacitor C. As the third switching element M3 is turned on, the first switching element M1 and the second switching element M2 are turned off, and thus the current flowing to the power supply unit 110 through the first switching element M1 is blocked. That is, as the first switching element M1 turns off, the starting power supplied to the power supply unit 110 is stopped, and the starting time ends.

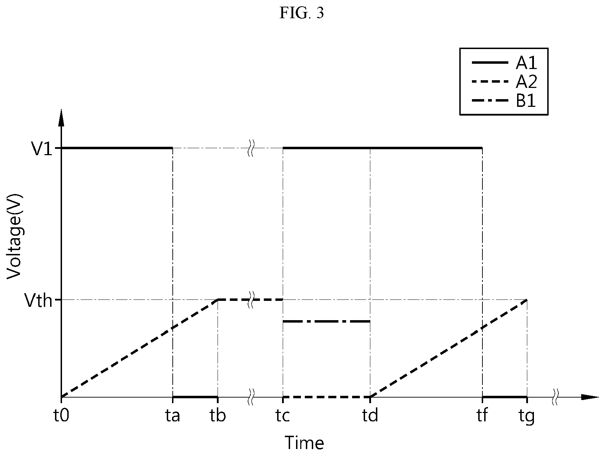

FIG. 3 is a graph schematically showing a voltage applied to a first switching element M1 and a third switching element M3 described with reference to FIG. 2. Specifically, the voltage A1 of the first switching element M1 represents a drain voltage of the first switching element M1 when the first switching element M1 is a p-type MOSFET. The voltage A2 of the third switching element represents a gate voltage of the third switching element M3 when the third switching element M3 is an n-type MOSFET. The voltage B1 of the wake-up signal (Input_wakeup) means a signal that the control unit receives from the external control device 20 in the sleep mode. The time intervals and voltage magnitudes of the graph shown in FIG. 3 are simply indicated for convenience of explanation, and should not be interpreted as being limited to the illustration in FIG. 3.

In response to the breaker CB transitioning from the trip state to the on state at t0, the third switching element M3 is turned off and the first switching element M1 is turned on by the voltage applied to the first node N1. The first switching element M1 that is turned on may have a first voltage V1. Thereafter, the starting power may be provided to the power supply unit 110 through the first switching element M1 during the time t0 to ta.

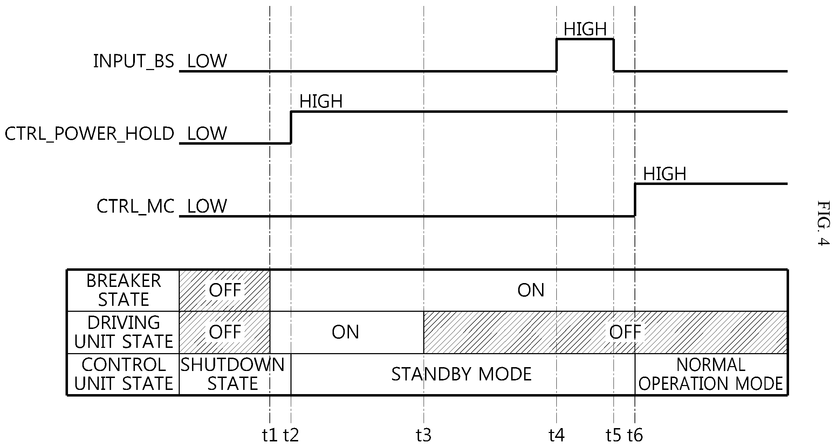

The driving unit 120 is configured to turn on the third switching element M3 and turn off the first switching element M1 when the operating voltage of the third switching element M3 reaches the threshold voltage (Vth) by the capacitor C charged during the starting time, for example, at the ta time point. Therefore, the starting power supplied through the first switching element M1 may be interrupted. That is, referring to FIG. 3, the time from t0 to ta may correspond to the starting time during which the driving unit 120 provides the starting power to the power supply unit 110. When the starting time expires, the operation of the starting unit that provides the starting power to the power supply unit 110 is terminated. With reference to FIGS. 1 and 4, the black start function performed by the battery control apparatus 100 according to an embodiment based on the operation of the driving unit 120 described above will be described. Meanwhile, the graph during tc to tg in FIG. 3 is for explaining the operation of the driving unit 120 when a wake-up signal (Input_wakeup) is applied, and will be described later along with related content.

FIG. 4 is a diagram showing states of various signals transmitted and received between components while a control unit 140 switches from a shutdown state to a normal operation mode. The time interval between the first to sixth time points shown in FIG. 4 is only an example and should not be interpreted limitedly.

Referring to FIG. 4, the input (INPUT_BS) that executes the black start function may have a low (LOW) level or high (HIGH) level. Additionally, the first control signal (CTRL_POWER_HOLD) may have a low (LOW) level or high (HIGH) level. The first control signal (CTRL_POWER_HOLD) is a signal that transitions the switching unit 130 from the turn-off state to the turn-on state, and is a signal output from the control unit 140 to the switching unit 130. Additionally, the second control signal (CTRL_MC) may have a low (LOW) level or high (HIGH) level. The second control signal (CTRL_MC) is a signal that transitions the relay R from the turn-off state to the turn-on state, and is a signal output by the control unit 140 to the relay R. For each signal, the low level may mean that the corresponding signal is not output, or that a signal with a signal size less than a predetermined value is output. For each signal, the high level may mean that the corresponding signal is output, or that a signal with a signal size greater than a predetermined value is output.

Hereinafter, the OFF state of the breaker may mean a trip state. The trip state may mean that the CP1 terminal and the CP2 terminal are electrically separated, and the CN1 terminal and the CN2 terminal are electrically separated. The ON state of the breaker may mean that the breaker operates so that the CP1 terminal and the CP2 terminal are electrically connected, and the CN1 terminal and the CN2 terminal are electrically connected.

Hereinafter, the OFF state of the driving unit may mean a state in which the driving unit does not output the starting power, and the ON state of the driving unit may mean a state in which the driving unit outputs the starting power.

First, referring to FIG. 1, the breaker CB is installed on the charging and discharging path L1, and one end of the breaker CB may include a CP1 terminal connected to the positive electrode terminal (BAT+) of the battery B and a CN1 terminal connected to the negative electrode terminal (BAT-) of the battery B. The other end of the breaker CB faces one end of the breaker CB and may include a CP2 terminal and a CN2 terminal that are electrically connected to the external control device 20.

The driving unit 120 may be connected to the other end opposite to one end facing the battery among both ends of the breaker CB.

Referring to FIG. 1, the relay R may be located on the charging and discharging path L1. The relay R is located at the other end of the breaker CB and may be turned on or off under the control of the control unit 140.

When a power outage occurs in the power system 1, the breaker CB transitions from the on state to the trip state (off), and the electrical connection between the CP1 terminal and the CP2 terminal and the electrical connection between the CN1 terminal and the CN2 terminal are disconnected. When a power outage occurs, the operation of the energy storage system 10, that is, the battery control apparatus 100 and the external control device 20, is stopped. That is, in this case, the battery control apparatus 100 and the external control device 20 are in a shutdown state in which no electrical operation can be performed, and specifically, the operation of all components including the control unit 140 and the driving unit 120 is stopped (OFF). Additionally, the output of the second control signal (CTRL_MC) to turn on the relay R is also stopped, so the relay R is in the turn-off state. Referring to FIG. 4, for convenience of explanation, for example, the state before the first time point is a power outage state in which the breaker CB is in a trip state (Off), the driving unit 120 is also in an off state, and the control unit 140 is also in a shutdown state.

The starting power may be supplied from the first node N1 located at the part on the charging and discharging path L1 that is electrically connected to the battery as the breaker CB transitions to the on state.

Specifically, in the shutdown state, the breaker CB may receive the input (e.g., input from a user) that causes transition to the on state. For example, when the breaker CB transitions to the on state based on receiving an input that causes the breaker CB to transition to the on state at the first time point, the CP1 terminal and the CP2 terminal may be electrically connected, and the CN1 terminal and the CN2 terminal may be electrically connected. Therefore, the voltage supplied from the battery may be applied to the first node N1 located on the charging and discharging path L1 at the rear end of the breaker CB (for example, the other end of the breaker CB). In other words, the first node N1 may be located in a part on the charging and discharging path L1 that is electrically connected to the battery as the breaker CB transitions to the on state.

When the voltage from the battery is applied to the first node N1, the driving unit 120 may operate. That is, at the first time point, as the breaker CB transitions from the trip state to the on state, the state of the driving unit 120 also switches from the off state to the on state.

The power supply unit 110 may be configured to generate the first operation power from the first node N1.

Specifically, at the first time point, the driving unit 120 supplies the starting power from the first node N1 to the power supply unit 110. When the starting power is supplied, the power supply unit 110 may generate the first operation power from the first node N1 and apply the generated first operation power to the control unit 140. The control unit 140 may initially start based on the first operation power.

The initially started control unit 140 may output the first control signal (CTRL_POWER_HOLD) to the switching unit 130 after the second time point. From the second time point when the control unit 140 is initially started and outputs the first control signal (CTRL_POWER_HOLD), the control unit 140 may operate in the standby mode in the shutdown state. Here, the first control signal (CTRL_POWER_HOLD) is a signal that transitions the switching unit 130 from the turn-off state to the turn-on state. The switching unit 130 may be turned on in response to the first control signal (CTRL_POWER_HOLD).

The switching unit 130 may be configured to be connected to the second node N2 located between the battery and the breaker CB.

Specifically, the turned-on switching unit 130 may be electrically connected to the second node N2 located on the charging and discharging path L1 at the front end of the breaker CB (for example, one end of the breaker CB). Therefore, after the second time point, the main power path M may be formed between the second node N2 and the switching unit 130, and power may be supplied from the second node N2 to the power supply unit 110 through the main power path M.

The power supply unit 110 may be configured to generate the second operation power from the second node N2 through the switching unit 130.

Specifically, the power supply unit 110 may generate the second operation power from the second node N2 through the switching unit 130 turned on at the second time point, and apply the generated second operation power to the control unit 140. The control unit 140 may maintain the start state based on the second operation power. That is, the control unit 140 may operate in the standby mode while maintaining the start state based on the second operation power from the second time point. The standby mode in this specification may mean a state in which the relay R for connection to an external control device is not turned on, and charging and discharging of the battery B is not performed. In other words, the standby mode is a state before entering the normal operation mode in which charging and discharging is performed, and can be said to be a state in which the control unit has already escaped the shutdown state and is awake.

At the third time point, the driving unit 120 stops outputting the starting power to the power supply unit 110. The information on stopping the starting power has already been described with reference to FIGS. 2 and 3 and is therefore omitted. Here, the time during the first time point to the third time point during which the driving unit 120 is in the on state may correspond to the above-described starting time.

Even after the third time point when the starting power is not input to the power supply unit 110, the control unit 140 is already initially started and operating in the standby mode, so the first control signal (CTRL_POWER_HOLD) may be continuously transmitted to the switching unit 130, and therefore, the main power path M is maintained in the electrically connected state.

Next, the control unit 140 may receive an input (INPUT_BS) that executes the black start function from the outside. Specifically, during the fourth time point to the fifth time point, an input (INPUT _BS) for executing the black start function is received from the operator of the power system 1 or an upper system, and the control unit 140 may output the second control signal (CTRL_MC) to the relay R at the sixth time point based on the above input. Here, the second control signal (CTRL_MC) is a signal that transitions the relay R from the turn-off state to the turn-on state. The relay R may be turned on in response to the second control signal (CTRL_MC). From the sixth time point when the relay R is turned on, the control unit 140 may operate in the normal operation mode. Specifically, the control unit 140 may be in a normal operation mode that outputs the power stored in the battery to the external control device 20 or receives power from the external control device 20 and stores it in the battery.

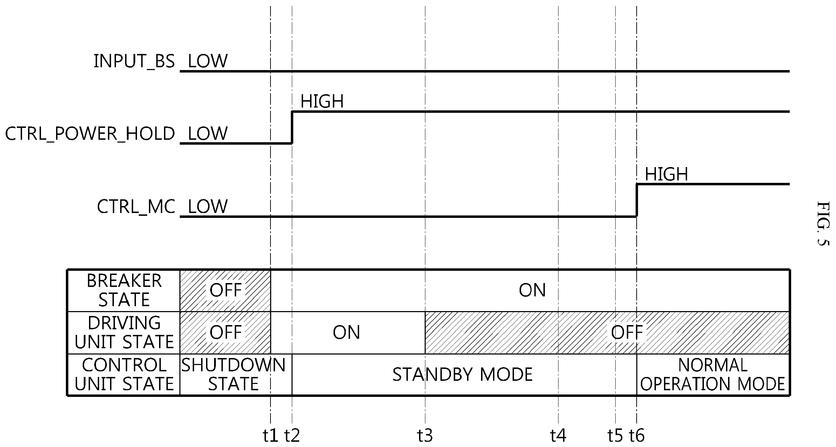

Meanwhile, in addition to black start, which starts the energy storage system 10 and the external control device 20 in a power outage state, the on/off control of the power system 1 may be necessary even in situations other than a power outage state. Referring to FIG. 5, an embodiment in which the power system 1 normally starts during the inspection process or the initial installation process of the power system 1 is described.

FIG. 5 is a diagram showing the states of various signals transmitted and received between components while the control unit 140 switches from the shutdown state to the normal operation mode. The time interval between the first to sixth time points shown in FIG. 5 is only an example and should not be interpreted limitedly.

In the normal start, since an abnormal event such as a power outage has not occurred in the power system 1, compared to FIG. 4, the input (INPUT_BS) for executing the black start function is not received from the outside. Therefore, this embodiment is similar to the content described with reference to FIG. 4 except for the input (INPUT_BS) that executes the black start function, and the differences are explained.

Referring to FIG. 5, since the state of the power system 1 described above is a state in which a black start function, such as a power outage, is not required, the input (INPUT_BS) that executes the black start function may have a low (LOW) level. Additionally, the first control signal (CTRL_POWER_HOLD) may have a low (LOW) level or high (HIGH) level. The first control signal (CTRL_POWER_HOLD) is a signal that transitions the switching unit 130 from the turn-off state to the turn-on state, and is a signal output from the control unit 140 to the switching unit 130. Additionally, the second control signal (CTRL_MC) may have a low (LOW) level or high (HIGH) level. The second control signal (CTRL_MC) is a signal that transitions the relay R from the turn-off state to the turn-on state, and is a signal output by the control unit 140 to the relay R. For each signal, the low level may mean that the corresponding signal is not output, or that a signal with a signal size less than a predetermined value is output. For each signal, the high level may mean that the corresponding signal is output or that a signal with a signal size greater than a predetermined value is output.

The battery control apparatus 100 may further include a communication interface (not shown) for communication with the external control device 20.

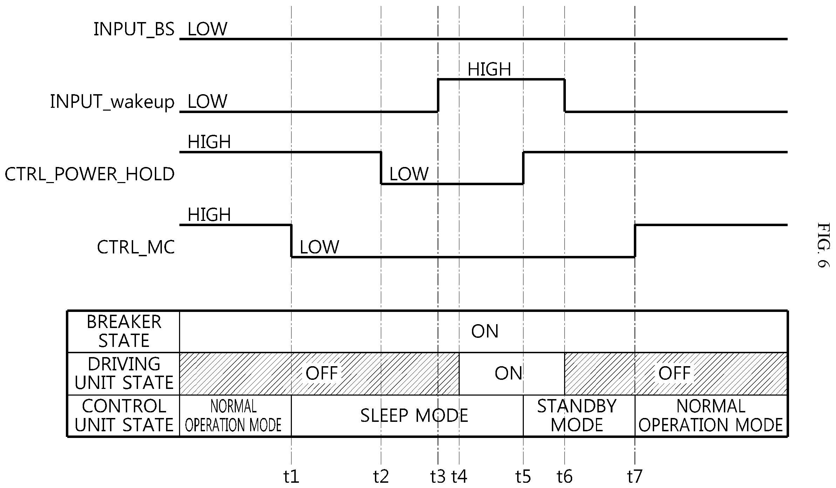

While the control unit 140 is in the standby mode, the control unit 140 may check the state of the external control device 20 through communication with the external control device 20. Specifically, during the third to sixth time points when the control unit 140 is in the standby mode after the third time point when the operation of the driving unit 120 that outputs the starting power to the power supply unit 110 is terminated, the control unit 140 may perform internal diagnosis of the battery control apparatus 100 (or energy storage system 10). If normality of each operation of the battery control apparatus 100 is diagnosed and each operation is determined to be normal, the control unit 140 may diagnose the external control device 20 through communication with the external control device 20. If the external control device 20 is determined to be normal, the control unit 140 may output a second control signal (CTRL_MC) to the relay R at the sixth time point. The relay R may be turned on in response to the second control signal (CTRL_MC). From the sixth time point when the relay R is turned on, the control unit 140 may operate in the normal operation mode. Specifically, the control unit 140 may be in the normal operation mode that outputs the power stored in the battery to the external control device 20 or receives power from the external control device 20 and stores it in the battery. Next, the power control operation by the external control device 20 will be described with reference to FIGS. 2 and 6.

FIG. 6 is a diagram showing the states of various signals transmitted and received between components during the power control operation by an external control device 20. First, the sleep operation in which the external control device 20 changes the energy storage system 10 to a sleep mode is described. The time interval between the first to seventh time points shown in FIG. 6 is only an example and should not be interpreted limitedly.

The power system 1 may be in a normal operation mode at the initial stage (before the first time point). Specifically, for convenience of explanation, it will be described as an example that in the state before the first time point, the breaker CB is in the on state and the control unit 140 is also in the normal operation mode. Here, the driving unit 120 is configured to operate only during the starting time, so it is natural that it is in an off state in the normal operation mode after the starting time.

Referring to FIG. 6, since the state of the power system 1 described above is a state in which a black start function, such as a power outage, is not required, the input (INPUT_BS) that executes the black start function may have a low (LOW) level. Additionally, the wake-up signal (Input_wakeup) may have a low level or high (HIGH) level. The wake-up signal (Input_wakeup) is a signal transmitted by the external control device 20 to the driving unit 120. Additionally, the first control signal (CTRL_POWER_HOLD) may have a low level or high level. The first control signal (CTRL_POWER_HOLD) is a signal that transitions the switching unit 130 from the turn-off state to the turn-on state, and is a signal output from the control unit 140 to the switching unit 130. Additionally, the second control signal (CTRL_MC) may have a low (LOW) level or high (HIGH) level. The second control signal (CTRL_MC) is a signal that transitions the relay R from the turn-off state to the turn-on state, and is a signal output by the control unit 140 to the relay R. For each signal, the low level may mean that the corresponding signal is not output, or that a signal with a signal size less than a predetermined value is output. For each signal, the high level may mean that the corresponding signal is output, or that a signal with a signal size greater than a predetermined value is output.

The external control device 20 may transmit a sleep signal to the energy storage system 10, that is, the control unit 140, in order to minimize power consumption in a certain environment. For example, if the power system 1 is part of a solar power system, the amount of power produced and charged is reduced in winter, so it is necessary to minimize the operation of the energy storage system 10 to reduce power consumption. In addition, when an event occurs that requires reducing the power consumption of the energy storage system 10 for various reasons, the external control device 20 may transmit a sleep signal to the control unit 140. Although not shown in FIG. 6, the external control device 20 may transmit a sleep signal to the control unit 140 at the first time point. In particular, without changing the breaker CB from the on state to the off state, the state of the control unit 140 changes from the normal operation mode to the sleep mode based on the sleep signal transmitted by the external control device 20 to the control unit 140.

The control unit 140 may be configured to turn off at least one of the breaker CB, relay R or the switching unit 130 based on receiving the sleep signal from the external control device 20. Here, the relay R is located between the breaker CB and the external control device 20.

Specifically, the control unit 140 may stop outputting the second control signal (CTRL_MC) output to the relay R in response to the sleep signal at the first time point. As the output of the second control signal (CTRL_MC) is stopped, the relay R may transition from the turn-on state to the turn-off state. When the relay R is in the turn-off state, power transmission and reception are stopped, so the power consumed by the energy storage system 10 may be reduced compared to that in the normal operation mode. In particular, the control unit 140 may enter the sleep mode while the breaker CB is in the on state.

Next, at the second time point, the control unit 140 may stop outputting the first control signal (CTRL_POWER_HOLD) output to the switching unit 130. As the output of the first control signal (CTRL_POWER_HOLD) is stopped, the switching unit 130 may transition from the turn-on state to the turn-off state. When the switching unit 130 enters the turn-off state, the power supply from the battery to the control unit 140 is stopped, so the power consumed by the energy storage system 10 may be further reduced. That is, power consumption may be primarily reduced as the first time point is passed, and then power consumption may be minimized as the second time point is passed. Next, a wake-up operation in which the external control device 20 changes the energy storage system 10 from the sleep mode to the normal operation mode will be described.

At the third time point, the external control device 20 may transmit a wake-up signal (Input_wakeup) to the driving unit 120. For example, the external control device 20 may apply a wake-up signal (Input_wakeup) to the driving unit 120 during the third time point to the fifth time point. The wake-up signal (Input_wakeup) may be a low voltage signal of 3.3 V to 12 V. The driving unit 120, which receives the wake-up signal (Input_wakeup), changes from the off state to the on state at the fifth time point, and is configured to output the starting power to the power supply unit 110. This will be described again with reference to FIG. 2.

Referring to FIG. 2, the driving unit 120 may be configured to include a photo coupler PC that receives a wake-up signal (Input_wakeup).

The photo coupler PC may include a light emitting unit such as a diode and a light receiving unit. The light emitting unit generates an optical signal by the wake-up signal (Input_wakeup) received from the external control device 20, and the generated optical signal may be output to the light receiving unit. In response to the light receiving unit receiving the optical signal, the third switching element M3 may transition from the turn-on state to the turn-off state. In particular, the wake-up signal (Input_wakeup) is a relatively low voltage signal and may be a signal of about 12 V or 3.3 V. In other words, according to the present disclosure, there is an effect of waking up the control unit 140 (battery control apparatus 100) even with a low voltage signal.

The driving unit 120 may be configured to output the starting power to the power supply unit 110 during the starting time, based on receiving the wake-up signal (Input_wakeup) from the external control device 20. Referring again to FIG. 3, the operation of the driving unit 120 in response to reception of the wake-up signal (Input_wakeup) will be described.

Referring to FIG. 3, the driving unit 120 may receive a wake-up signal (Input_wakeup) during the time tc to td. The time tc in FIG. 3 corresponds to the third time in FIG. 6, and the driving unit 120 is in a state in which it does not supply the starting power to the power supply unit 110 before the tc time.

The driving unit 120 may be configured so that, when the photo coupler PC of the driving unit 120 operates by the wake-up signal (Input_wakeup), the third switching element M3 turns off, and the first switching element M1 and the second switching element M2 transition from the turn-off state to the turn-on state.

Specifically, the third switching element M3 is turned off at the time tc based on the wake-up signal (Input_wakeup) received during the time from tc to td. At the tc time point, in response to the turned-off third switching element M3, the first switching element M1 and the second switching element M2 are turned on, and current (I) flows to the power supply unit 110 during the tc time to the tf time through the turned-on first switching element M1. Accordingly, the starting power from the battery may be supplied to the power supply unit 110 through the driving unit 120.

Similar to the above, the operating voltage of the third switching element M3 reaches the threshold voltage (Vth) by the capacitor C, which is charged during the starting time when the starting power is supplied to the power supply unit 110 through the driving unit 120. For example, when the operating voltage of the third switching element M3 reaches the threshold voltage (Vth) at the tf time point, the third switching element M3 is configured to turn on again, and the first switching element M1 is configured to turn off. Therefore, the starting power supplied through the first switching element M1 may be interrupted. That is, referring to FIG. 3, the time tc to tf may correspond to the starting time in response to the wake-up signal (Input_wakeup) in which the driving unit 120 provides the starting power to the power supply unit 110. When the starting time expires, the operation of the starting unit that provides the starting power to the power supply unit 110 in response to the wake-up signal (Input_wakeup) is terminated.

When the starting power is supplied, the power supply unit 110 may generate the first operation power from the first node N1 and apply the generated first operation power to the control unit 140. The control unit 140 may initially start based on the first operation power.

The initially started control unit 140 may output the first control signal (CTRL_POWER_HOLD) to the switching unit 130 after the fifth time point. From the fifth time point when the control unit 140 initially starts and outputs the first control signal (CTRL_POWER_HOLD), the control unit 140 may operate from the sleep mode to the standby mode. Here, the first control signal (CTRL_POWER_HOLD) is a signal that transitions the switching unit 130 from the turn-off state to the turn-on state. The switching unit 130 may be turned on in response to the first control signal (CTRL_POWER_HOLD).

The turned-on switching unit 130 may be electrically connected to the second node N2 located on the charging and discharging path L1 at the front end of the breaker CB (for example, one end of the breaker CB). Therefore, after the fifth time point, the main power path M may be formed between the second node N2 and the switching unit 130, and power may be supplied from the second node N2 to the power supply unit 110 through the main power path M.

The power supply unit 110 may generate the second operation power from the second node N2 through the switching unit 130 turned on at the fifth time point, and apply the generated second operation power to the control unit 140. The control unit 140 may maintain the start state based on the second operation power. That is, the control unit 140 may operate in the standby mode while maintaining the start state based on the second operation power from the fifth time point. Meanwhile, the driving unit 120 stops outputting the starting power to the power supply unit 110 after a predetermined starting time has elapsed. The starting power output to the power supply unit 110 is stopped, but the control unit 140 is already operating in the standby mode, so the first control signal (CTRL_POWER_HOLD) may be continuously transmitted to the switching unit 130, and therefore, the main power path M maintains the electrically connected state.

Next, the control unit 140 may output the second control signal (CTRL_MC) to the relay R at the seventh time point. Here, the second control signal (CTRL_MC) is a signal that transitions the relay R from the turn-off state to the turn-on state. The relay R may be turned on in response to the second control signal (CTRL_MC). From the seventh time point when the relay R is turned on, the control unit 140 may operate in the normal operation mode. Specifically, the control unit 140 may be in a normal operation mode that outputs the power stored in the battery to the external control device 20 or receives power from the external control device 20 and stores it in the battery. That is, according to the above-described embodiment, the power control operation of the control unit 140 (an operation of switching from the normal operation mode to the sleep mode or switching from the sleep mode to the normal operation mode via the standby mode) is possible while the breaker CB maintains the on state.

In this way, based on the event in which the breaker CB transitions from the trip state to the on state and the wake-up signal (Input_wakeup) received from the external control device 20, the battery control apparatus 100 according to an embodiment of the present disclosure may implement a black start function and a power control operation through the driving unit 120 operating for a predetermined starting time. In other words, the battery control apparatus 100 described above has the advantage of being able to implement both conflicting functions.

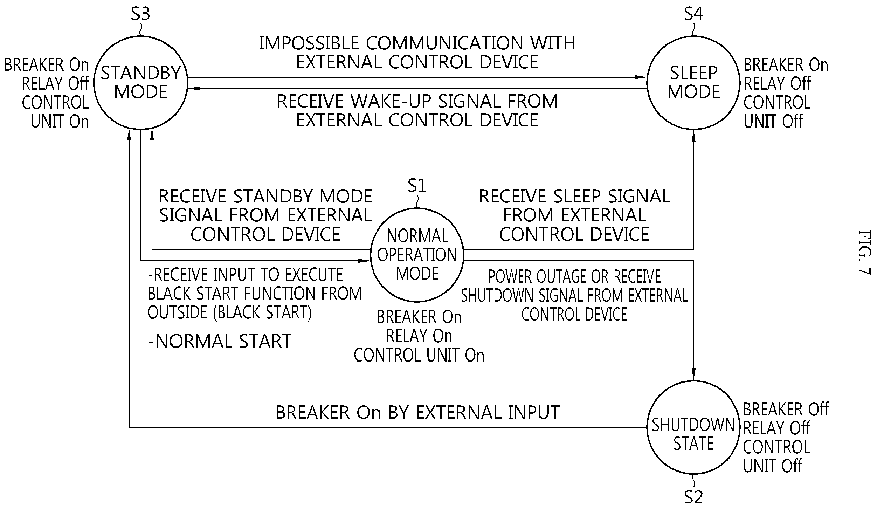

FIG. 7 is a diagram schematically showing a state machine for an energy storage system 100 including the battery control apparatus 10 according to an embodiment. According to FIG. 7, states of the energy storage system 10 according to the above-described embodiments are shown.

The energy storage system 10 according to one embodiment may be in a state operating in any one of the normal operation mode S1, the shutdown state S2, the standby mode S3, or the sleep mode S4.

In the normal operation mode S1, the breaker CB, the relay R, and the control unit 140 of the energy storage system 10 may be in the on state. The energy storage system 10, operating in the normal operation mode S1, may output the power stored in the battery to the external control device 20, or receive power from the external control device 20 and store it in the battery.

The energy storage system 10 may change from the normal operation mode S1 to the shutdown state S2 based on a power outage occurring in the power system 1 or receiving a shutdown signal from the external control device 20.

In the shutdown state S2, the breaker CB is in the trip state (Off), and the relay R and the control unit 140 may also be in the off state. Based on receiving an external input that causes the breaker CB to transition to the on state, the state of the energy storage system 10 may change from the shutdown state S2 to the standby mode S3. Since the series of processes for changing from the shutdown state S2 to the standby mode S3, including the operation of the driving unit 120, have already been described, redundant explanations will be omitted.

In the standby mode S3, the breaker CB and the control unit 140 may be in the on state, and the relay R may be in the off state. The state of the energy storage system 10 may be changed from the standby mode S3 to the normal operation mode S1 when an input (INPUT_BS) executing the black start function is received from the outside or by the above-described normal start. Conversely, when a signal to change to the standby mode S3 is received from the external control device 20, the state of the energy storage system 10 may be changed from the normal operation mode S1 to the standby mode S3.

Based on the sleep signal being received from the external control device 20 in the normal operation mode S1, the state of the energy storage system 10 may be changed from the normal operation mode S1 to the sleep mode S4.

In the sleep mode S4, the breaker CB may be in the on state, and the relay R and the control unit 140 may be in the off state. In the sleep mode S4, the relay R and the control unit 140 are in the off state, so power consumption may be minimized. When a wake-up signal (Input_wakeup) is received from the external control device 20, the state of the energy storage system 10 may change from the sleep mode S4 to the standby mode S3. Conversely, if it is detected that communication with the external control device 20 is not possible in the standby mode S3, the state of the energy storage system 10 may be changed from the standby mode S3 to the sleep mode S4.

That is, referring to FIG. 7, an embodiment of the energy storage system 10 that operates from a shutdown state through a standby mode to a normal operation mode (S2 to S3 to S1) has been described through FIGS. 1 to 5. In addition, the embodiment of the energy storage system 10, which operates in the normal operation mode (S1 to S4 to S3 to S1) from the normal operation mode through the sleep mode and the standby mode, is described in detail with FIGS. 1 to 3 and FIG. 6.

The battery control apparatus 100 according to the present disclosure may be applied to BMS. That is, the BMS according to the present disclosure may include the battery control apparatus 100 described above. In this configuration, at least some of the components of the battery control apparatus 100 may be implemented by supplementing or adding functions included in a conventional BMS. For example, at least some of the components of the battery control apparatus 100 may be implemented as components of a BMS.

Additionally, the battery control apparatus 100 according to the present disclosure may be included in a battery pack. That is, the battery pack according to the present disclosure may include the battery control apparatus 100 according to the present disclosure and at least one battery (or, battery cell). In addition, the battery pack according to the present disclosure may further include, in addition to the battery control apparatus 100 according to the present disclosure, components normally included in the battery pack, such as one or more secondary batteries, a BMS, a current sensor, a relay, a fuse, a pack case, and the like. In addition, at least some components of the battery control apparatus 100 according to the present disclosure may be implemented as conventional components included in the battery pack. For example, at least some functions or operations of the control unit 140 of the battery control apparatus 100 according to the present disclosure may be implemented by the BMS included in the battery pack.

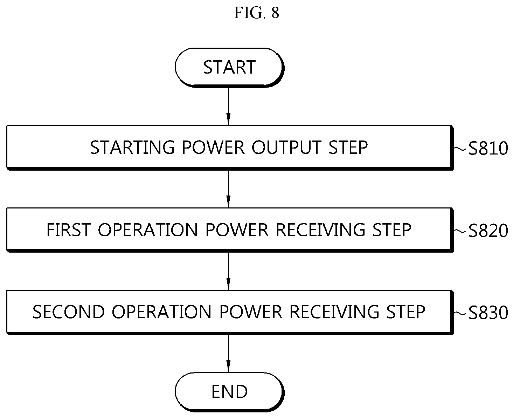

FIG. 8 is a flowchart schematically showing a battery control method according to an embodiment of the present disclosure. In FIG. 8, the subject of each step may be each component of the battery control apparatus 100 according to the present disclosure described above.

Referring to FIG. 8, the battery control method according to the present disclosure may include a starting power output step (S810), a first operation power receiving step (S820), and a second operation power receiving step (S830).

The starting power output step (S810) is a step of applying starting power to the power supply unit 110 and may be performed by the driving unit 120.

Specifically, the power supply unit 110 may be connected to the charging and discharging path L1 of the battery B. In one embodiment, the driving unit 120 electrically connects the first node N1 and the power supply unit 110 based on the breaker CB transitioning from the trip state to the on state or a wake-up signal (Input_wakeup) received from the external control device 20. The first node N1 may be a node located in a part on the charging and discharging path L1 that is electrically connected to the battery as the breaker CB transitions to the on state. Additionally, the first node N1 may be described as a node located on the charging and discharging path L1 at the rear end of the breaker CB connected to the external control device 20.

When the starting power is applied to the power supply unit 110 from the first node N1, the power supply unit 110 may generate the first operation power. The starting power is output to the power supply unit 110 during a preset starting time when the driving unit 120 operates, and when the starting time expires, the output of the starting power may be stopped.

The first operation power receiving step (S820) is a step of receiving the first operation power output from the power supply unit 110 and may be performed by the control unit 140.

Specifically, the power supply unit 110 may generate the first operation power based on the power applied from the first node N1 (power from the battery). The power supply unit 110 may initially start the control unit 140 by outputting the generated first operation power to the control unit 140.

The control unit 140, which has received the first operation power, may output a first control signal (CTRL_POWER_HOLD) that turns on the switching unit 130 to the switching unit 130. The switching unit 130 may transition from the turn-off state to the turn-on state based on the first control signal (CTRL_POWER_HOLD).

The second operation power receiving step (S830) is a step of receiving the second operation power generated by the power supply unit 110 after the starting time and may be performed by the control unit 140.

The switching unit 130 in the turn-on state may electrically connect the second node N2 and the power supply unit 110. The second node N2 may be a node located between the battery and the breaker CB on the charging and discharging path L1. The second node N2 may also be described as a node located on the charging and discharging path L1 at the front end of the breaker CB connected to the battery.

The power supply unit 110 may generate the second operation power based on the power power from the battery) applied from the second node N2. The power supply unit 110 may output the generated second operation power to the control unit 140. The control unit 140 may maintain output of the first control signal (CTRL_POWER_HOLD) to the switching unit 130 using the second operation power supplied from the power supply unit 110. Accordingly, the switching unit 130 maintains the turn-on state, and the control unit 140 may operate in the standby mode.

Here, the driving unit 120 is configured to apply the starting power to the power supply unit 110 during the preset starting time and stop outputting the starting power after the starting time, but the control unit 140, which is initially driven through the starting power, turns on the switching unit 130, so may continuously receive power from the battery even after the output of the starting power is stopped. That is, the control unit 140 may be driven by the second operation power generated by the power supply unit 110 from the second node N2, and outputs the second control signal (CTRL_MC), which turns on the relay R, to the relay R to operate in the normal operation mode. In other words, the control unit 140 may be driven using the second operation power instead of the first operation power after the starting time.

In relation to the steps S810 to S830, the contents of the battery control apparatus 100 according to the present disclosure described above may be applied in the same or similar manner. Therefore, detailed descriptions of each step of the battery control method according to the present disclosure are omitted.

The embodiments of the present disclosure described above may not be implemented only through an apparatus and a method, but may be implemented through a program that realizes a function corresponding to the configuration of the embodiments of the present disclosure or a recording medium on which the program is recorded. The program or recording medium may be easily implemented by those skilled in the art from the above description of the embodiments.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Additionally, many substitutions, modifications and changes may be made to the present disclosure described hereinabove by those skilled in the art without departing from the technical aspects of the present disclosure, and the present disclosure is not limited to the above-described embodiments and the accompanying drawings, and each embodiment may be selectively combined in part or in whole to allow various modifications. However, the scope of the invention is solely defined by the appended claims.

### (Reference Symbols)

1: power system
10: energy storage system
20: external control device
100: battery control apparatus
110: power supply unit
120: driving unit
130: switching unit
140: control unit
B: battery
CP: breaker
R: relay
SC: sensing unit

## Claims

1. A battery control apparatus (10, 100), comprising:
a1) a power supply unit (110) connected to a charging and discharging path (L1) of a battery (B);
a2) a driving unit (120) configured to connect between the charging and discharging path (L1) and the power supply unit (110) and operate the power supply unit (110) by applying a starting power from the battery (B) to the power supply unit (110) during a preset starting time;
a3) a switching unit (130) connected between the charging and discharging path (L1) of the battery (B) and the power supply unit (110), wherein when the switching unit (130) is turned on, power supplied from the battery (B) is provided to the power supply unit (110) through the switching unit (130); and
a4) a control unit (140) configured to turn on the switching unit (130) in response to that a first operation power output from the power supply unit (110) is applied, and to be driven through a second operation power generated by the power supply unit (110) based on a power of the battery (B) applied through the switching unit (130) after the starting time;
a5.1) wherein the power supply unit (110) is configured to output the first operation power to the control unit (140) when the starting power is applied through the driving unit (120), and
a5.2) output the second operation power to the control unit (140) when the power is applied through the switching unit (130).

2. The battery control apparatus (10, 100) according to claim 1, wherein the driving unit (120) is configured to stop outputting the starting power after the starting time has elapsed.

3. The battery control apparatus according to claim 1, wherein a breaker (CB) is provided on the charging and discharging path of the battery, and
wherein the driving unit (120) is connected to an end opposite to the battery (B) among both ends of the breaker (CB).

4. The battery control apparatus according to claim 3, wherein the starting power is supplied from a first node located on the charging and discharging path at a part electrically connected to the battery (B) as the breaker (CB) transitions to an on state.

5. The battery control apparatus (10, 100) according to claim 4, wherein the power supply unit (110) is configured to generate the first operation power from the first node.

6. The battery control apparatus according to claim 1, wherein the switching unit (130) is configured to be connected to a second node located between the battery (B) and the breaker (CB).

7. The battery control apparatus (10, 100) according to claim 6, wherein the power supply unit (110) is configured to generate the second operation power from the second node through the switching unit (130).

8. The battery control apparatus (10, 100) according to claim 1, wherein, based on that a sleep signal is received from an external control device (20), the control unit (140) is configured to turn off at least one of the switching unit (130) and a relay located between a breaker (CB) and the external control device (20).

9. The battery control apparatus (10, 100) according to claim 1, wherein the driving unit (120) is configured to include a photo coupler that receives a wake-up signal from an external control device (20).

10. The battery control apparatus (10, 100) according to claim 9, wherein the driving unit (120) is configured to output the starting power to the power supply unit (110) during the starting time, based on that a wake-up signal is received from the external control device (20).

11. A battery pack, comprising the battery control apparatus (10, 100) according to any one of claims 1 to 10.

12. A battery control method, comprising
a starting power output step (S810) of applying a starting power to a power supply unit (110) connected to a charging and discharging path of a battery (B) during a preset starting time;
a first operation power receiving step (S820) of turning on, by a control unit (140), a switching unit (130) connected between the charging and discharging path of the battery and the power supply unit (110) in response to that a first operation power output from the power supply unit (110) is applied to the control unit (140), wherein when the switching unit (130) is turned on, power supplied from the battery (B) is provided to the power supply unit (110) through the switching unit (130); and
a second operation power receiving step (S830) of the control unit (140) being driven through a second operation power generated by the power supply unit (110) based on a power of the battery (B) applied through the switching unit (130) after the starting time;
wherein the power supply unit (110) is configured to output the first operation power to the control unit (140) when the starting power is applied, and output the second operation power to the control unit (140) when the power is applied through the switching unit (130).

## Patentansprüche

1. Batteriesteuervorrichtung (10, 100), umfassend:
eine Stromversorgungseinheit (110), die mit einem Lade- und Entladepfad (L1) einer Batterie (B) verbunden ist;
eine Ansteuereinheit (120), die dazu eingerichtet ist, zwischen dem Lade- und Entladepfad (L1) und der Stromversorgungseinheit (110) geschaltet zu sein und die Stromversorgungseinheit (110) zu betreiben, indem sie während einer vorgegebenen Startzeitspanne eine Startleistung von der Batterie (B) an die Stromversorgungseinheit (110) anlegt;
eine Schalteinheit (130), die zwischen dem Lade- und Entladepfad (L1) der Batterie (B) und der Stromversorgungseinheit (110) geschaltet ist, wobei, wenn die Schalteinheit (130) eingeschaltet wird, von der Batterie (B) bereitgestellte Leistung der Stromversorgungseinheit (110) über die Schalteinheit (130) zugeführt wird; und
eine Steuereinheit (140), die dazu eingerichtet ist, die Schalteinheit (130) als Reaktion darauf einzuschalten, dass eine von der Stromversorgungseinheit (110) ausgegebene erste Betriebsleistung angelegt wird, und durch eine zweite Betriebsleistung betrieben zu werden, die von der Stromversorgungseinheit (110) auf Grundlage einer Leistung der Batterie (B) erzeugt wird, die nach Ablauf der Startzeitspanne über die Schalteinheit (130) angelegt wird;
wobei die Stromversorgungseinheit (110) dazu eingerichtet ist, die erste Betriebsleistung an die Steuereinheit (140) auszugeben, wenn die Startleistung über die Ansteuereinheit (120) angelegt wird, und
die zweite Betriebsleistung an die Steuereinheit (140) auszugeben, wenn die Leistung über die Schalteinheit (130) angelegt wird.

2. Batteriesteuervorrichtung (10, 100) nach Anspruch 1, wobei die Ansteuereinheit (120) dazu eingerichtet ist, die Ausgabe der Startleistung zu beenden, nachdem die Startzeitspanne abgelaufen ist.

3. Batteriesteuervorrichtung nach Anspruch 1, wobei ein Leistungsschalter (CB) in dem Lade- und Entladepfad der Batterie vorgesehen ist und wobei die Ansteuereinheit (120) mit demjenigen der beiden Enden des Leistungsschalters (CB) verbunden ist, das der Batterie (B) gegenüberliegt.

4. Batteriesteuervorrichtung nach Anspruch 3, wobei die Startleistung von einem ersten Knoten bereitgestellt wird, der in dem Lade- und Entladepfad an einem Abschnitt angeordnet ist, der elektrisch mit der Batterie (B) verbunden ist, während der Leistungsschalter (CB) in einen eingeschalteten Zustand übergeht.

5. Batteriesteuervorrichtung (10, 100) nach Anspruch 4, wobei die Stromversorgungseinheit (110) dazu eingerichtet ist, die erste Betriebsleistung aus dem ersten Knoten zu erzeugen.

6. Batteriesteuervorrichtung nach Anspruch 1, wobei die Schalteinheit (130) dazu eingerichtet ist, mit einem zweiten Knoten verbunden zu sein, der zwischen der Batterie (B) und dem Leistungsschalter (CB) angeordnet ist.

7. Batteriesteuervorrichtung (10, 100) nach Anspruch 6, wobei die Stromversorgungseinheit (110) dazu eingerichtet ist, die zweite Betriebsleistung aus dem zweiten Knoten über die Schalteinheit (130) zu erzeugen.

8. Batteriesteuervorrichtung (10, 100) nach Anspruch 1, wobei die Steuereinheit (140) dazu eingerichtet ist, auf Grundlage dessen, dass ein Schlafsignal von einer externen Steuervorrichtung (20) empfangen wird, mindestens eines von der Schalteinheit (130) und einem Relais, das zwischen einem Leistungsschalter (CB) und der externen Steuervorrichtung (20) angeordnet ist, auszuschalten.

9. Batteriesteuervorrichtung (10, 100) nach Anspruch 1, wobei die Ansteuereinheit (120) dazu eingerichtet ist, einen Optokoppler zu umfassen, der ein Aufwecksignal von einer externen Steuervorrichtung (20) empfängt.

10. Batteriesteuervorrichtung (10, 100) nach Anspruch 9, wobei die Ansteuereinheit (120) dazu eingerichtet ist, während der Startzeitspanne die Startleistung an die Stromversorgungseinheit (110) auszugeben, auf Grundlage dessen, dass ein Aufwecksignal von der externen Steuervorrichtung (20) empfangen wird.

11. Batteriepack, umfassend die Batteriesteuervorrichtung (10, 100) nach einem der Ansprüche 1 bis 10.

12. Batteriesteuerverfahren, umfassend:
einen Startleistungsausgabeschritt (S810), bei dem während einer vorgegebenen Startzeitspanne eine Startleistung an eine Stromversorgungseinheit (110) angelegt wird, die mit einem Lade- und Entladepfad einer Batterie (B) verbunden ist;
einen ersten Betriebsleistungsempfangsschritt (S820), bei dem durch eine Steuereinheit (140) eine Schalteinheit (130), die zwischen dem Lade- und Entladepfad der Batterie und der Stromversorgungseinheit (110) geschaltet ist, als Reaktion darauf eingeschaltet wird, dass eine von der Stromversorgungseinheit (110) ausgegebene erste Betriebsleistung an die Steuereinheit (140) angelegt wird, wobei, wenn die Schalteinheit (130) eingeschaltet wird, von der Batterie (B) bereitgestellte Leistung der Stromversorgungseinheit (110) über die Schalteinheit (130) zugeführt wird; und
einen zweiten Betriebsleistungsempfangsschritt (S830), bei dem die Steuereinheit (140) durch eine zweite Betriebsleistung betrieben wird, die von der Stromversorgungseinheit (110) auf Grundlage einer Leistung der Batterie (B) erzeugt wird, die nach Ablauf der Startzeitspanne über die Schalteinheit (130) angelegt wird;
wobei die Stromversorgungseinheit (110) dazu eingerichtet ist, die erste Betriebsleistung an die Steuereinheit (140) auszugeben, wenn die Startleistung angelegt wird, und die zweite Betriebsleistung an die Steuereinheit (140) auszugeben, wenn die Leistung über die Schalteinheit (130) angelegt wird.

## Revendications

1. Appareil de commande de batterie (10, 100), comprenant :
a1) une unité d'alimentation électrique (110) connectée à un trajet de charge et de décharge (L1) d'une batterie (B) ;
a2) une unité d'excitation (120) prévue pour être connectée entre le trajet de charge et de décharge (L1) et l'unité d'alimentation électrique (110) et faire fonctionner l'unité d'alimentation électrique (110) par application d'une puissance de démarrage à partir de la batterie (B) vers l'unité d'alimentation électrique (110) pendant un temps de démarrage prédéfini ;
a3) une unité de commutation (130) connectée entre le trajet de charge et de décharge (L1) de la batterie (B) et l'unité d'alimentation électrique (110), où, lorsque l'unité de commutation (130) est activée, la puissance de la batterie (B) est fournie à l'unité d'alimentation électrique (110) par l'unité de commutation (130) ; et
a4) une unité de commande (140) prévue pour activer l'unité de commutation (130) en réaction à l'application d'une première sortie de puissance de fonctionnement provenant de l'unité d'alimentation électrique (110), et pour être excitée par une deuxième puissance de fonctionnement générée par l'unité d'alimentation électrique (110) sur la base d'une puissance de la batterie (B) appliqué par l'unité de commutation (130) après le temps de démarrage ;
a5.1) où l'unité d'alimentation électrique (110) est prévue pour délivrer la première puissance de fonctionnement à l'unité de commande (140) lorsque la puissance de démarrage est appliquée par l'intermédiaire de l'unité d'excitation (120), et
a5.2) pour délivrer la deuxième puissance de fonctionnement à l'unité de commande (140) lorsque la puissance est appliquée par l'unité de commutation (130).

2. Appareil de commande de batterie (10, 100) selon la revendication 1, où l'unité d'excitation (120) est prévue pour arrêter la sortie de la puissance de démarrage après écoulement du temps de démarrage.

3. Appareil de commande de batterie selon la revendication 1, où un disjoncteur (CB) est disposé sur le trajet de charge et de décharge de la batterie, et
où l'unité d'excitation (120) est connectée à une extrémité opposée à la batterie (B) entre les deux extrémités du disjoncteur (CB).

4. Appareil de commande de batterie selon la revendication 3, où la puissance de démarrage est fournie par un premier nœud situé sur le trajet de charge et de décharge dans une partie connectée électriquement à la batterie (B) lorsque le disjoncteur (CB) passe à l'état d'activation.

5. Appareil de commande de batterie (10, 100) selon la revendication 4, où l'unité d'alimentation électrique (110) est prévue pour générer la première puissance de fonctionnement à partir du premier nœud.

6. Appareil de commande de batterie selon la revendication 1, où l'unité de commutation (130) est prévue pour être connectée à un deuxième nœud situé entre la batterie (B) et le disjoncteur (CB).

7. Appareil de commande de batterie (10, 100) selon la revendication 6, où l'unité d'alimentation électrique (110) est prévue pour générer la deuxième puissance de fonctionnement par l'unité de commutation (130) à partir du deuxième nœud.

8. Appareil de commande de batterie (10, 100) selon la revendication 1, où, sur la base de la réception d'un signal de veille provenant d'un dispositif de commande extérieur (20), l'unité de commande (140) est prévue pour désactiver l'unité de commutation (130) et/ou un relais situé entre un disjoncteur (CB) et le dispositif de commande extérieur (20).

9. Appareil de commande de batterie (10, 100) selon la revendication 1, où l'unité d'excitation (120) est prévue de manière à comprendre un photocoupleur recevant un signal de réveil provenant d'un dispositif de commande extérieur (20).

10. Appareil de commande de batterie (10, 100) selon la revendication 9, où l'unité d'excitation (120) est prévue pour délivrer la puissance de démarrage à l'unité d'alimentation électrique (110) pendant le temps de démarrage, sur la base de la réception d'un signal de réveil en provenance du dispositif de commande extérieur (20).

11. Bloc-batterie, comprenant l'appareil de commande de batterie (10, 100) selon l'une des revendications 1 à 10.

12. Procédé de commande de batterie, comprenant
une étape de sortie de puissance de démarrage (S810) consistant à appliquer une puissance de démarrage à une unité d'alimentation électrique (110) connectée à un trajet de charge et de décharge (L1) d'une batterie (B) pendant un temps de démarrage prédéfini ;
une première étape de réception de puissance de fonctionnement (S820) consistant à activer, par une unité de commande (140), une unité de commutation (130) connectée entre le trajet de charge et de décharge de la batterie et l'unité d'alimentation électrique (110), en réaction à l'application à l'unité de commande (140) d'une première sortie de puissance de fonctionnement provenant de l'unité d'alimentation électrique (110), où, lorsque l'unité de commutation (130) est activée, l'alimentation est fournie par la batterie (B) à l'unité d'alimentation électrique (110) par l'unité de commutation (130) ; et
une deuxième étape de réception de puissance de fonctionnement (S830) de l'unité de commande (140) excitée par une deuxième puissance de fonctionnement générée par l'unité d'alimentation électrique (110) sur la base d'une puissance de la batterie (B) appliquée par l'unité de commutation (130) après le temps de démarrage ;
où l'unité d'alimentation électrique (110) est prévue pour fournir la première puissance de fonctionnement à l'unité de commande (140) lorsque la puissance de démarrage est appliquée, et la deuxième puissance de fonctionnement à l'unité de commande (140) lorsque la puissance est appliquée par l'unité de commutation (130).
